# EUROPÄISCHE PATENTSCHRIFT

(11) **EP 1 375 238 B1**
(45) Veröffentlichungstag und Bekanntmachung des Hinweises auf die Patenterteilung: **05.01.2005**
(21) Anmeldenummer: 03009295.1
(22) Anmeldetag: 24.04.2003
(51) Int. Cl.: B60K 41/02

(54) **Antriebsmoment- und Kupplungsteuerung eines rollenden Fahrzeugs**
Engine torque and clutch control in a free-wheeling vehicle
Commande de couple moteur et d'embrayage en véhicules roulants

(30) Priorität: 29.06.2002 DE 10229317
(43) Veröffentlichungstag der Anmeldung: 02.01.2004
(73) Patentinhaber: ZF Sachs AG, 97424 Schweinfurt (DE)
(72) Erfinder: Stühler, Rainer, 97475 Zeil (DE); Iftiger, Jörk, Dipl.-Ing.(FH), 97539 Wonfurt (DE); Thein, Albert, Dipl.-Ing.(FH), 97437 Hassfurt (DE)

(56) Entgegenhaltungen:
- DE-A- 10 026 332
- US-A- 4 370 903
- US-A- 4 621 545
- US-A- 5 704 872

## Beschreibung

Die vorliegende Erfindung betrifft ein Verfahren zum Bringen eines Antriebssystems eines rollenden Fahrzeugs, welches Antriebssystem eine automatisierte Kupplungsanordnung im Drehmomentübertragungsweg zwischen einem Antriebsaggregat und einer Getriebeanordnung aufweist, bei in der Getriebeanordnung aktivierter Gangstufe und zumindest teilweise ausgerückter Kupplungsanordnung in einen zur Drehmomentübertragung zwischen dem Antriebsaggregat und der Getriebeanordnung bereiten Zustand.

Bei modernen Antriebssystemen, welche über eine automatisierte Kupplungsanordnung und ggf. auch eine automatisierte Getriebeanordnung, wie z. B. automatisiertes Schaltgetriebe, verfügen, wird die Kupplungsanordnung gemäß verschiedenen Vorgabeparametern durch eine dieser zugeordnete Stellanordnung betätigt. Dabei kann der Zustand auftreten, dass dann, wenn ein Fahrer ein als Fahrorgan vorgesehenes Fahrpedal zunächst nicht betätigt, in der Getriebeanordnung jedoch ein Gang eingelegt ist, zum Ermöglichen eines zumindest durch eine Motorbremswirkung nicht beeinflussten Dahinrollens des Fahrzeugs die Kupplung zumindest teilweise, vorzugsweise vollständig ausgerückt wird, so dass im Antriebsstrang eine Drehmomentübertragungsunterbrechung im Bereich der Kupplungsanordnung vorhanden ist. In diesem Zustand wird auf Grund mangelnder Betätigung des Fahrpedals die Drehzahl des Antriebsaggregats absinken, beispielsweise auf einen im Bereich einer Leerlaufdrehzahl liegenden Drehzahlwert. Will aus diesem Zustand der Fahrer die normale Fahrt wieder aufnehmen, so wird er dazu das Fahrpedal betätigen. Wird daraufhin die Kupplungsanordnung wieder in einen Zustand gebracht, in welchem sie das Abgabedrehmoment des Antriebsaggregats, also beispielsweise einer Brennkraftmaschine, zur Getriebeanordnung übertragen kann, so besteht die Gefahr, dass auf Grund der vorhandenen Drehzahldifferenz zwischen der Drehzahl des Antriebsaggregats und der Getriebeeingangsdrehzahl Longitudinalschwingungen im Fahrzeug erzeugt werden. Diese Gefahr ist vor allem dann groß, wenn, wie vorangehend bereits ausgeführt, die Drehzahl des Antriebsaggregats unter der Getriebeeingangsdrehzahl liegt.

Aus dem Dokument US 4621545 ist ein Verfahren zum Bringen eines Antriebssystems eines rollenden Fahrzeugs in einen zur Drehmomentübertragung zwischen dem Antriebsaggregat und der Getriebeanordnung bereiten Zustand bekannt.

Es ist die Aufgabe der vorliegenden Erfindung, ein Verfahren vorzusehen, mit welchem ein Antriebssystem eines rollenden Fahrzeugs bei zunächst zumindest teilweise ausgerückter Kupplungsanordnung und in der Getriebeanordnung eingelegter Gangstufe in einen zur Drehmomentübertragung zwischen dem Antriebsaggregat und der Getriebeanordnung bereiten Zustand gebracht werden kann, ohne dass dabei wesentliche Längsbeschleunigungen im Fahrzeug generiert werden.

Gemäß der vorliegenden Erfindung wird diese Aufgabe gelöst durch ein Verfahren zum Bringen eines Antriebssystems eines rollenden Fahrzeugs, welches Antriebssystem eine automatisierte Kupplungsanordnung im Drehmomentübertragungsweg zwischen einem Antriebsaggregat und einer Getriebeanordnung aufweist, bei in der Getriebeanordnung aktivierter Gangstufe und zumindest teilweise ausgerückter Kupplungsanordnung in einen zur Drehmomentübertragung zwischen dem Antriebsaggregat und der Getriebeanordnung bereiten Zustand, umfassend die Maßnahmen: a) Verändern der Drehzahl des Antriebsaggregats auf eine über einer Getriebeeingangsdrehzahl liegende Solldrehzahl, b) dann, wenn die Drehzahl des Antriebsaggregats im Bereich der Solldrehzahl ist, Erhöhen des Abgabedrehmoments des Antriebsaggregats und Verstellen der Kupplungsanordnung in Richtung Einrücken zum Senken der Drehzahl des Antriebsaggregats in Richtung Solldrehzahl.

Die bei den erfindungsgemäßen Maßnahmen vorgenommenen Prozeduren tragen dazu bei, dass der zunächst drehmomentübertragungsmäßig unterbrochene Antriebsstrang eines Fahrzeugs kontinuierlich, jedoch in vergleichsweise kurzer Zeit und ohne dem Erzeugen von Einkuppelstößen und daraus resultierenden Longitudinalschwingungen des Fahrzeugs in einen zur Drehmomentübertragung bereiten Zustand gebracht wird. Dazu sind im Wesentlichen zwei Phasen vorgesehen. In einer ersten Phase wird allein durch Drehzahlregelung dafür gesorgt, dass das Antriebsaggregat in den Bereich einer Solldrehzahl gelangt, die als wesentliches Charakteristikum der Erfindung über der Drehzahl der Getriebeeingansseite liegt. In einer zweiten Phase wird dann durch allmähliches Schließen der Kupplung die Drehzahl des Antriebsaggregats gedrückt, während gleichzeitig zum Vermeiden des Abwürgens des Motors und zum Heranführen des Abgabedrehmoments des Antriebsaggregats an das durch Fahrpedalbetätigung geforderte Drehmoment durch entsprechenden Eingriff des Motormanagements eine Aufregelung bzw. ein Hochfahren des Abgabedrehmoments erfolgt. Dadurch kann eine allmähliche Annäherung der Drehzahl des Antriebsaggregats an die Drehzahl der Getriebeeingangsseite erlangt werden.

Gemäß einem weiteren Aspekt der vorliegenden Erfindung wird zur möglichst schnellen Wiedererlangung des zur Drehmomentübertragung bereiten Zustands vorgeschlagen, dass vor oder während des Ergreifens der Maßnahme a) die Kupplungsanordnung in einen Stellzustand gebracht wird, der um einen Versatz von einem Schleifpunktstellzustand in Richtung Auskuppeln verschoben ist. Es sei in diesem Zusammenhang darauf hingewiesen, dass ein Schleifpunktstellzustand eine Betätigungsstellung einer Reibungskupplung repräsentiert, in welcher diese, kommend von einem drehmomentübertragungsmäßig vollständig unterbrochenen Zustand, beispielsweise einem vollständig ausgerückten Zustand, beginnt, durch einsetzenden Reibkontakt im Falle einer Reibkupplung ein Drehmoment zu übertragen. Durch diese Maßnahme wird sichergestellt, dass dann, wenn durch allmähliches Schließen der Kupplungsanordnung ein Einfluss auf die Drehzahl des Antriebsaggregats genommen werden soll, die am Beginn dieser Maßnahme auftretenden Zeitverzögerungen möglichst gering sind.

Gemäß einem weiteren vorteilhaften Aspekt kann bei der erfindungsgemäßen Vorgehensweise vorgesehen sein, dass bei Durchführung der Maßnahme b) das Abgabedrehmoment des Antriebsaggregats mit einer vorbestimmten Rate erhöht wird. Hier kann beispielsweise das Abgabedrehmoment des Antriebsaggregats mit im Wesentlichen konstanter Rate erhöht werden.

Um, wie bereits angeführt, während der Phase b) das vom Antriebsaggregat abgegebene Drehmoment an denjenigen Wert heranzuführen, der für den nachherigen Fahrzustand relevant ist, wird vorgeschlagen, dass bei Durchführung der Maßnahme b) das Abgabedrehmoment des Antriebsaggregats auf ein Sollmoment erhöht wird, wobei hier vorzugsweise als Sollmoment im Wesentlichen ein durch Fahrorganbetätigung gefordertes Vorgabedrehmoment vorgesehen ist.

Da, wie bereits ausgeführt, die in der Phase a) vorgegebene Solldrehzahl über der Drehzahl der Getriebeeingangsseite liegt, wird im Allgemeinen am Ende der Durchführung der Maßnahme b) die Drehzahl des Antriebsaggregats noch nicht die Getriebeeingangsdrehzahl erreicht haben. Es wird daher weiter vorgeschlagen, dass dann, wenn nach Durchführung der Maßnahme b) die Drehzahl des Antriebsaggregats nicht im Bereich der Getriebeeingangsdrehzahl ist, wenigstens durch Verstellen der Kupplungsanordnung in Richtung Einkuppeln die Drehzahl des Antriebsaggregats in Anpassung an einen sich der Getriebeeingangsdrehzahl annähernden Solldrehzahlverlauf in Richtung Getriebeeingangsdrehzahl verändert wird. Es wird in dieser Phase also für die Drehzahl des Antriebsaggregats ein vorbestimmter Verlauf vorgegeben, und durch entsprechende Kupplungsansteuerung wird versucht, das Antriebsaggregat hinsichtlich seiner Drehzahl in Anpassung an diesen Solldrehzahlverlauf, welcher ein im Wesentlichen sprungfreies Anpassen der Drehzahl des Antriebsaggregats an die Getriebeeingangsdrehzahl gewährleistet, auf den gewünschten Drehzahlwert zu bringen.

Dabei kann beispielsweise vorgesehen sein, dass der Solldrehzahlverlauf eine exponentielle Änderung der Drehzahl des Antriebsaggregats vorgibt.

Um in dieser an das Ende der Maßnahme b) sich anschließenden Phase von Anbeginn an eine möglichst gute Übereinstimmung zwischen der Drehzahl des Antriebsaggregats und dem Solldrehzahlverlauf sicherstellen zu können, wird vorgeschlagen, dass bei Erreichen des Sollmoments und vorhandener Abweichung zwischen der Drehzahl des Antriebsaggregats und der Getriebeeingangsdrehzahl ein Anfangsdrehzahlwert des Drehzahlverlaufs auf einen Wert im Bereich der Drehzahl des Antriebsaggregats gesetzt wird.

Wenn die Drehzahl des Antriebsaggregats an die Drehzahl der Getriebeeingangsseite herangeführt worden ist, was beispielsweise bedeuten kann, dass eine unter einer bestimmten Drehzahldifferenzenschwelle liegende Differenz oder/und eine unter einer bestimmten Drehzahlgradientendifferenzenschwelle liegende Differenz der Drehzahlgradienten der beiden betrachteten Drehzahlwerte vorliegt, dann kann die Kupplungsanordnung in Richtung vollständig eingerückter Kupplungsstellung verstellt werden, ohne dass die Gefahr der Erzeugung von Einkuppelstößen besteht.

Die vorliegende Erfindung wird nachfolgend mit Bezug auf die beiliegenden Zeichnungen detailliert beschrieben. Es zeigt:
- Fig. 1: eine skizzenhafte Darstellung eines Antriebssystems eines Fahrzeugs;
- Fig. 2: in den Diagrammen a), b) und c) die zeitlichen Verläufe verschiedener im Antriebssystem der Fig. 1 auftretender Größen bzw. Parameter bei Durchführung der erfindungsgemäßen Vorgehensweise.

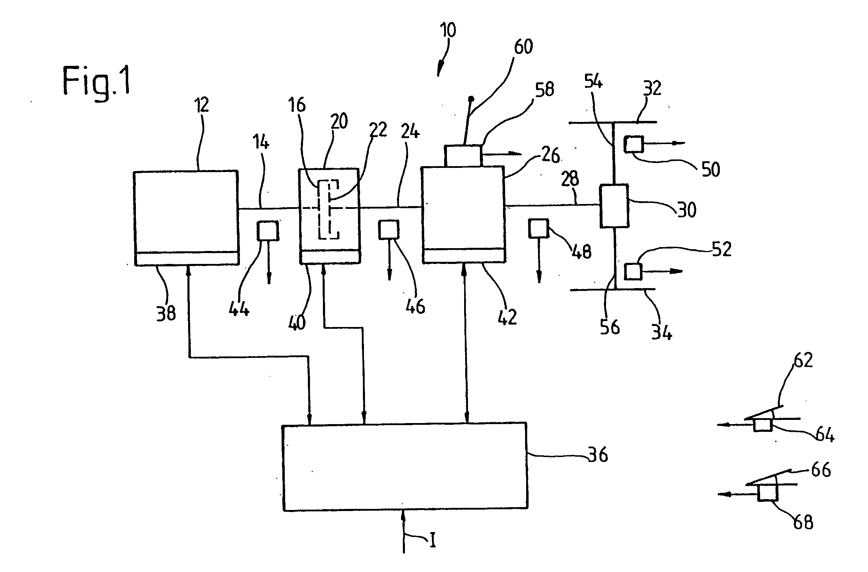

Zunächst wird mit Bezug auf die Figur 1 allgemein ein Antriebssystem beschrieben, bei welchem das erfindungsgemäße Verfahren angewandt werden kann. Das Antriebssystem 10 umfasst ein Antriebsaggregat 12, beispielsweise eine Brennkraftmaschine 12, das über eine Antriebswelle 14 mit einer Eingangsseite 16 einer automatisierten Kupplungsanordnung 20, beispielsweise Reibungskupplung, in Verbindung steht. Eine Ausgangsseite 22 der Kupplungsanordnung 20 steht über eine Getriebeeingangswelle 24 in Antriebsverbindung mit einer automatisierten Getriebeanordnung 26. Deren Ausgangswelle 28 treibt über ein Differenzial 30 angetriebene Räder 32, 34 an. Das Antriebsaggregat 12, die Kupplungsanordnung 20 und die Getriebeanordnung 26 stehen unter der Ansteuerung einer Ansteuervorrichtung 36. Diese Ansteuervorrichtung 36 steht im Datentaustausch mit einer Leistungsstellanordnung 38 des Antriebsaggregats, um durch die Zuleitung von Ansteuersignalen oder Befehlen zur Leistungsstellanordnung 38 die Leistungsabgabe beziehungsweise die Drehzahl des Antriebsaggregats 12 zu steuern beziehungsweise zu regeln. Es sei darauf verwiesen, dass die Leistungsstellanordnung 38 jeglichen Bereich eines Antriebsaggregats umfasst, in welchem ein Einfluss auf dessen Drehzahl beziehungsweise Leistungsabgabe genommen werden kann, beispielsweise das Einspritzsystem, das Drosselsystem, das Zündsystem, das Nockensystem usw. Selbstverständlich liefert die Leistungsstellanordnung 38 Information an die Ansteuervorrichtung 36, welche den Leistungsstellzustand des Antriebsaggregats 12 bezeichnet.

Ferner steht die Ansteuervorrichtung 36 mit einer Stellgliedanordnung 40 der automatisierten Kupplungsanordnung 20 in Verbindung, um durch Zufuhr entsprechender Stellsignale zu dieser die Kupplungsanordnung 20 zwischen einer eingerückten und einer ausgerückten Kupplungsstellung zu verstellen. Auch die Stellgliedanordnung 40 kann zur Ansteuervorrichtung 36 Information liefern, welche den momentanen Stellzustand der Kupplungsanordnung bezeichnet.

Weiter liefert die Ansteuervorrichtung 36 Ansteuersignale zur einer Stellgliedanordnung 42 der Getriebeanordnung 26. Diese Ansteuersignale führen zur Durchführung von Schaltvorgängen innerhalb der Getriebeanordnung 26. Auch hier wird der Ansteuervorrichtung 36 wieder Information rückgeliefert, welche den momentanen Stellzustand der Getriebeanordnung 26 bezeichnet. Die Ansteuervorrichtung 36 erhält weiter Information l von verschiedenen Sensoren, beruhend auf welcher Information die Ansteuervorrichtung 36 den Gesamtbetriebszustand des Fahrzeugs ermitteln kann. So ist beispielsweise ein Drehzahlsensor 44 vorgesehen, welcher die Drehzahl der Antriebswelle 14 erfasst. Es sei darauf verwiesen, dass, sofern hier von der Erfassung der Drehzahl die Rede ist, dies selbstverständlich auch die Erfassung jeglicher die Drehzahl charakterisierender Information umfasst, die dann beispielsweise in der Ansteuervorrichtung 36 zur tatsächlichen Ermittlung der Drehzahl an sich verarbeitet wird. Ferner ist ein Drehzahlsensor 46 vorgesehen, welcher die Drehzahl der Getriebeeingangswelle 24 erfasst, sowie ein Drehzahlsensor 48, welcher die Drehzahl der Getriebeausgangswelle 28 erfasst. Weiter sind Drehzahlsensoren 50, 52 vorgesehen, welche die Drehzahl der angetriebenen Räder 32, 34 beziehungsweise von diese antreibenden Wellen 54, 56 erfassen. Beruhend auf diesen beiden Sensorausgaben beziehungsweise beruhend auf der Ausgabe des Drehzahlsensors 48 kann die Fahrzeuggeschwindigkeit errechnet werden; d.h. diese Sensorausgaben der Sensoren 48, 50, 52 beinhalten Information über die Fahrzeuggeschwindigkeit.

Weiter ist ein Schaltsensor 58 vorgesehen, welcher eine Betätigung eines Schalthebels 60 erfasst und entsprechende Information 1 zur Ansteuervorrichtung 36 liefert. Beruhend auf dieser Information erkennt die Ansteuervorrichtung 36, welchen Schaltvorgang ein Fahrer durchführen will und erzeugt dann zum geeigneten Zeitpunkt und gegebenenfalls unter Berücksichtigung der weiteren den Fahrzustand repräsentierenden Information einen geeigneten Ansteuerbefehl für die Getriebeanordnung 26. Es sei darauf hingewiesen, dass an Stelle der Erfassung der Schalthebelbetätigung die Durchführung eines Schaltvorgangs auch nach Art eines Automatikgetriebes beruhend auf der Fahrsituation erfolgen kann.

Bei dem Antriebssystem 10 ist ferner ein Gas- oder Fahrpedal 62 mit einem zugeordneten Fahrpedalsensor 64 vorgesehen, dessen Ausgangssignal das Betätigungsausmaß des Fahrpedals repräsentiert. Weiter ist ein Bremspedal 66 vorgesehen, dem ebenfalls ein Sensor 68 zugeordnet ist. Das Ausgangssignal dieses Bremspedalsensors 68 repräsentiert das Betätigungsausmaß des Bremspedals 66.

Beruhend auf all diesen Sensoreingaben und möglicherweise noch weiteren Sensoreingaben, beispielsweise von einem Umgebungstemperatursensor, einem Kühlmitteltemperatursensor, einem Gierbewegungssensor und dergleichen, erzeugt die Ansteuervorrichtung 36 verschiedene Ansteuerbefehle oder Ansteuervorgaben, welche dann in den verschiedenen anzusteuernden Aggregaten oder Komponenten, also der Leistungsstellanordnung 38, der Stellgliedanordnung 40 und der Stellgliedanordnung 42 umgesetzt werden, d.h. zur Durchführung von Stellvorgängen im Antriebsaggregat 12, in der Kupplungsanordnung 20 beziehungsweise in der Getriebeanordnung 26 führen. Diese Ansteuervorgaben werden in der Ansteuervorrichtung 36 in einem Prozessor ermittelt, in welchem ein entsprechendes Steuerprogramm abläuft, das als Eingabe die verschiedenen Sensoreingaben l empfängt und das als Ausgabe eine Ansteuervorgabe erzeugt, die entweder als Ansteuerbefehl direkt zu den verschiedenen Stellbereichen 38, 40, 42 geleitet wird, oder die nachfolgend noch in der Ansteuervorrichtung 36 in einen jeweiligen Ansteuerbefehl umgesetzt und dann erst zu den Stellbereichen geleitet wird.

Es sei nun angenommen, dass ein das Antriebssystem 10 der Fig. 1 aufweisendes Fahrzeug sich in einem Zustand befindet, in welchem in der Getriebeanordnung 26 eine Gangstufe eingelegt ist und der Fahrzeugfahrer das Gas- oder Fahrpedal 62 nicht betätigt bzw. die Betätigung desselben beendet. Das Fahrzeug rollt dann beispielsweise auf leicht abschüssiger Straße dahin. Um dabei die Abbremsung des Fahrzeugs so weit als möglich zu unterbinden, wird die Kupplungsanordnung 20 durch entsprechende Ansteuerung der Stellgliedanordnung 40 in einen Zustand gebracht, in welchem zwischen der Antriebswelle 14 und der Getriebeeingangswelle 24 im Wesentlichen kein Drehmoment übertragen werden kann. Es sei beispielsweise angenommen, dass die Kupplungsanordnung 20 derart verstellt wird, dass sie in Richtung vollständig ausgekuppelter Stellung über einen Schleifpunkt, also denjenigen Punkt, an welchem sie beim Wiedereinkuppeln beginnt, ein Drehmoment zu übertragen, hinweg verstellt wird.

Die Folge dieses Eingriffs in das Antriebssystem 10 ist, dass bei näherungsweise konstanter Geschwindigkeit und somit auf Grund unverändert eingelegter Gangstufe in der Getriebeanordnung 26 näherungsweise konstanter Drehzahl der Getriebeeingangswelle 24 die Drehzahl des Antriebsaggregats 12, d.h. die Drehzahl der Antriebswelle 14, auf einen unter der Drehzahl der Getriebeeingangswelle 24 liegenden Wert fallen wird, da selbstverständlich bei ausgerückter Kupplungsanordnung 20 durch entsprechende Ansteuerung der Leistungsstellanordnung 38 des Antriebsaggregats 12 dafür gesorgt wird, dass dieses in seinen möglichst wenig Kraftstoffverbrauch verbrauchenden Leerlaufzustand kommt.

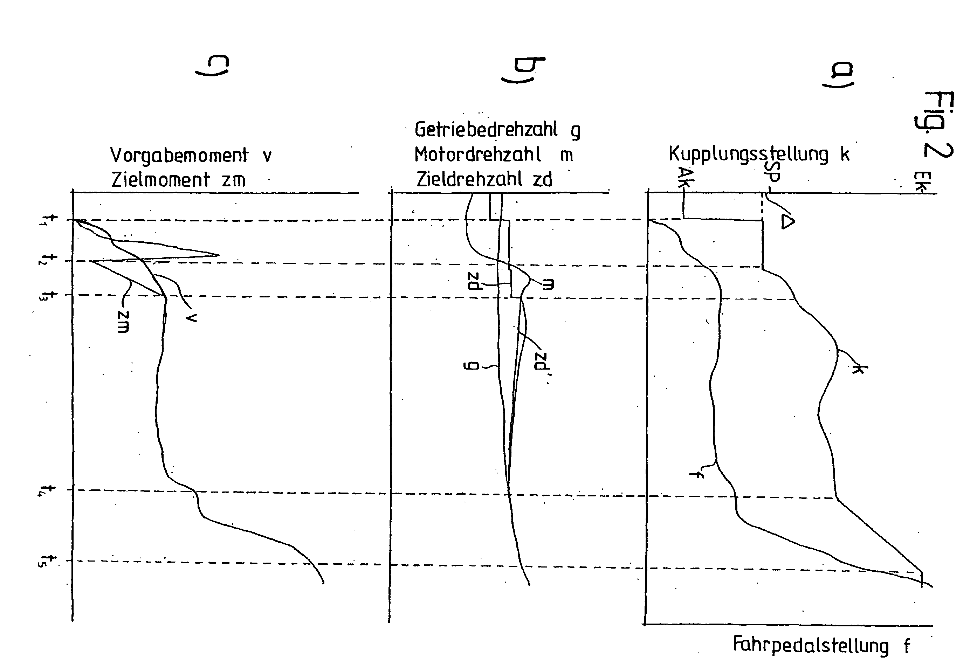

Will nun ausgehend von diesem Zustand der Fahrer die normale Fahrt mit näherungsweise konstanter Geschwindigkeit oder ggf. auch erhöhter Geschwindigkeit wieder aufnehmen, so wird er das Fahrpedal 62 betätigen bzw. niederdrücken. Dies wird vermittels des Fahrpedalsensors 64 erfasst. Die Ansteurvorrichtung 36 wird dann, wie im Folgenden mit Bezug auf die Diagramme a), b) und c) der Fig. 2 detailliert beschrieben, die Leistungsstellanordnung 38 und die Stellgliedanordnung 40 der Kupplungsanordnung 20 so ansteuern, dass dieser vom Fahrer gewünschte Fahrzustand erreicht wird, ohne dass Einkuppelstöße oder wesentliche Longitudinalschwingungen im Fahrzeug generiert werden.

Es sei zunächst angenommen, dass in Fig. 2 zum Zeitpunkt t₁ der Fahrer durch entsprechende Betätigung des Fahrpedals 62 zu erkennen gibt, dass er die normale Fahrt wieder aufnehmen will. Diese Fahrpedalbetätigung ist durch die im Diagramm a) der Fig. 2 erkennbare Fahrpedalstellung f) repräsentiert, welche beispielsweise den Stellwinkel des Fahrpedals 62 bezogen auf einen bei nicht vorhandener Betätigung vorliegenden Referenzwinkel darstellen kann. Mit dem Beginn der Betätigung des Fahrpedals 62 wird zunächst in einer ersten Phase der erfindungsgemäßen Vorgehensweise durch Ansteuerung der Stellgliedanordnung 40 die Kupplungsanordnung 20 derart verstellt, dass sie in einen um einen Versatz Δ vor dem Schleifpunkt SP liegenden Betätigungszustand gelangt. Dieses Verstellen ist an der Kurve k) des Diagramms a) der Fig. 2 erkennbar, welche die Kupplungsstellung bzw. den Stellzustand der Kupplungsanordnung 20 repräsentiert. Wie bereits ausgeführt, sei hier zunächst ein Zustand angenommen, in welchem die Kupplungsanordnung 20 zunächst vollständig ausgerückt war, sich also bei der Auskuppelstellung AK befunden hat. War vor dem Zeitpunkt t₁ die Kupplung nicht vollständig ausgerückt, d.h. dass sie einen Stellzustand zwischen dem Schleifpunkt SP und der Einkuppel-Stellung EK hatte, wird sie gleichwohl zunächst auf die um den Versatz Δ in Richtung Auskuppelstellung vom Schleifpunkt SP verschobene Kupplungsstellung gebracht. In dieser Phase ist die Kupplungsanordnung 20 dann in einem Zustand, in welchem sie noch kein Drehmoment übertragen kann, in welchem jedoch eine geringe Veränderung des Stellzustands in Richtung Einkuppeln die Erzeugung einer Reibwirkung in der Kupplungsanordnung 20 und somit die Herstellung eines Drehmomentübertragungszustands mit sich bringt.

Gleichzeitig mit dem Beginn der Fahrpedalbetätigung 62 zum Zeitpunkt t, wird, wie im Diagramm b) der Fig. 2 anhand der eine Solldrehzahl für das Antriebsaggregat 12 repräsentierenden Kurve zd erkennbar, für die Drehzahl des Antriebsaggregats 12, welche allgemein durch die Kurve m repräsentiert ist, ein Sollmoment vorgegeben, der zum Zeitpunkt t₁ über der Drehzahl der Getriebeeingangswelle 24 liegt, welche im Diagramm b) der Fig. 2 durch die Kurve g repräsentiert ist. Hier kann beispielsweise ein konstanter Drehzahldifferenzenwert für den Beginn dieser ersten Phase vorgegeben werden. Selbstverständlich ist es auch möglich, einen in Abhängigkeit von dem Ausmaß der Betätigung des Fahrpedals 62 ausgewählten Differenzenwert vorzusehen. Da also zum Zeitpunkt t₁ eine deutliche Differenz zwischen der Solldrehzahl zd und der Drehzahl m des Antriebsaggregats 12, also der Antriebswelle 14, vorhanden ist, wird durch entsprechende Ansteuerung der Leistungsstellanordnung 38 für das Antriebsaggregat 12 ein im Diagramm c) der Fig. 2 durch die Kurve zm repräsentiertes Sollmoment vorgegeben. Das Antriebsaggregat 12 folgt dieser Sollmomentvorgabe ohne wesentliche zeitliche Verzögerung, so dass für die vorliegende Erklärung angenommen werden kann, dass das vom Antriebsaggregat 12 tatsächlich abgegebene Abgabedrehmoment näherungsweise auch dem durch die Kurve zm im Diagramm c) dargestellten Sollmoment entspricht.

Durch Erhöhung des Sollmomentes zm und somit entsprechende Erhöhung des Abgabedrehmoments des Antriebsaggregats 12 erhöht sich, wie anhand der Kurve m erkennbar, selbstverständlich auch die Drehzahl des Antriebsaggregats 12, da dieses zunächst nicht zur Beschleunigung des Fahrzeugs arbeitet, sondern das gesamte vorgesehene Drehmoment zur Überwindung der internen Reibung des Antriebsaggregats 12 und des Massenträgheitsmoments desselben genutzt wird.

Durch Erhöhung des Antriebsmoments des Antriebsaggregats 12 gemäß der Sollmomentkurve zm nähert sich die Drehzahl des Antriebsaggregats 12 sehr rasch der Solldrehzahl, die zum Zeitpunkt t, vorgegeben worden ist, an. Es werden daher bei entsprechender Verringerung der Differenz zwischen diesen beiden Drehzahlwerten auch das Sollmoment zm des Antriebsaggregats 12 und somit in entsprechender Weise das von diesem abgegebene Antriebsdrehmoment verringert, so dass auch der Gradient der Kurve m am Ende dieser ersten Phase wieder abnimmt.

Zum Zeitpunkt t₂ erreicht die Drehzahl des Antriebsaggregats 12 die Solldrehzahl zd. Auf Grund des zunächst noch vorhandenen vergleichsweise großen Gradienten der Drehzahl des Antriebsaggregats 12 übersteigt die entsprechende Kurve m jedoch die Solldrehzahl zd deutlich. Zu diesem Zeitpunkt t₂ ist dann die erste Phase der erfindungsgemäßen Vorgehensweise, in welcher die Kupplungsanordnung 20 in einen Vorbereitungszustand gebracht wird und durch Drehzahlregelung die Drehzahl des Antriebsaggregats 12 auf einen im Bereich einer Solldrehzahl zd liegenden Wert erhöht wird, beendet. Es beginnt dann eine zweite Phase, in welcher nunmehr durch Ansteuerung der Stellgliedanordnung 40 der Kupplungsanordnung 20 einerseits und der Leistungsstellanordnung 38 des Antriebsaggregats 12 andererseits dafür gesorgt wird, dass die zunächst noch ansteigende Drehzahl des Antriebsaggregats 12, die nunmehr auch deutlich über der Drehzahl der Getriebeeingangswelle 24 liegt, was durch den Vergleich der Kurven m und g ersichtlich wird, wieder in Richtung zur Drehzahl der Getriebeeingangswelle 24 verändert wird. Es wird hierzu dann, wie man anhand der Kurve k im Diagramm a) der Fig. 2 erkennt, die Kupplungsanordnung 20 in Richtung Einkuppelstellung EK verstellt, so dass sie nach sehr kurzer Zeit den Schleifpunkt SP überschreitet und beginnt, ein Drehmoment zu übertragen. Dies führt dazu, dass sofort der Gradient der Drehzahl des Antriebsaggregats 12 abnimmt. Einhergehend mit dem Einrücken der Kupplungsanordnung 20 wird durch die Ansteuerung der Leistungsstellanordnung 38 das Abgabedrehmoment des Antriebsaggregats 12 wieder entsprechend der ein Sollmoment repräsentierenden Kurve zm verändert. In dieser zweiten Phase ist eine mit näherungsweise konstantem Gradienten erfolgende Erhöhung des Abgabedrehmoments des Antriebsaggregats 12 vorgegeben. Die Steigung dieser Drehmomentenrampe bzw. der Gradient der Kurve zm nach dem Zeitpunkt t₂ kann beispielsweise wiederum konstant vorgegeben sein, kann aber selbstvertsändlich auch beispielsweise in Abhängigekit von der Fahrpedalstellung ausgewählt werden.

Es sei in diesem Zusammenhang noch darauf hingewiesen, dass am Beginn der zweiten Phase, also nach dem Zeitpunkt t₂, wie durch die Kurve f erkennbar, der Fahrer immer noch dabei ist, das Fahrpedal 62 stärker zu betätigen. Es wird daher auch kurz nach Beginn dieser zweiten Phase eine geringfügige Korrektur in der Solldrehzahl zd für die Drehzahl des Antriebsaggregats 12 vorgenommen und diese geringfügig erhöht. Da dann, wie ebenfalls anhand der Kurve f erkennbar, die Betätigung des Fahrpedals 62 einen näherungsweise konstanten Zustand einnimmt, wird auch bis zum Ende der zweiten Phase des erfindungsgemäßen Verfahrens keine Änderung der Solldrehzahl mehr vorgenommen.

In dieser zweiten Phase wird bei allmählich gemäß der Kurve zm erhöhtem Abgabedrehmoment des Antriebsaggregats 12 durch das Einrücken der Kupplungsanordnung 20 dafür gesorgt, dass, wie durch die Kurve m erkennbar, die Drehzahl des Antriebsaggregats 12 einen Scheitelpunkt erreicht und dann wieder abfällt. Dies bedeutet, dass die Drehzahl des Antriebsaggregats 12 nunmehr trotz kontinuierlich erhöhtem Abgabedrehmoment gedrückt wird, um sie in Richtung zur Drehzahl der Getriebeeingangswelle 24 zu verändern.

Die zweite Phase der erfindungsgemäßen Vorgehensweise ist dann beendet, wenn durch entsprechend andauernde Ansteuerung der Leistungsstellanordnung 38 das Abgabedrehmoment des Antriebsaggregats 12, welches, wie bereits vorangehend ausgeführt, mit geringen Abweichungen dem Zieldrehmoment zm entspricht, im Bereich desjenigen Vorgabedrehmoments v ist, welches durch Fahrpedalbetätigung letztendlich vom Fahrer dem Antriebsaggregat 12 abverlangt wird. Dieser Zustand liegt zum Zeitpunkt t₃ vor, wo, wie im Diagramm c) der Fig. 2 erkennbar, die Kurve für das Sollmoment zm die Kurve v für das entsprechend der Fahrpedalbetätigung vorgegebene Vorgabemoment erreicht.

Im Allgemeinen ist davon auszugehen, dass zu diesem Zeitpunkt die Drehzahl des Antriebsaggregats 12 noch über der Drehzahl der Getriebeeingansgwelle 24 liegt, insbesondere auch daher, da zunächst als Solldrehzahl zd für die Drehzahl des Antriebsaggregats 12 ein über der Drehzahl der Getriebeeingangswelle 24 liegender Wert vorgegeben worden ist. Es beginnt dann zum Zeitpunkt t₃ eine dritte Phase, in welcher für die Drehzahl des Antriebsaggregats 12 ein Solldrehzahlverlauf zd' vorgegeben wird, der ausgehend von der zum Zeitpunkt t₃ vorliegenden Drehzahl des Antriebsaggregats 12 für eine Annäherung dieser Drehzahl an die Drehzahl der Getriebeeingangswelle 24 sorgt. Es wird daher zunächst zum Zeitpunkt t₃ als Solldrehzahl zd derjenige Wert vorgegeben, welchen die Drehzahl des Antriebsaggregats 12 zu diesem Zeitpunkt hat. Man erkennt dies anhand des stufenartigen Anstiegs der Solldrehzahl auf den zum Zeitpunkt t₃ vorliegenden Wert der Kurve m, also der Drehzahl des Antriebsaggregats 12. Ausgehend von diesem Wert führt dann während dieser dritten Phase der beispielsweise mit exponentiell abfallendem Verlauf vorgegebene Solldrehzahlverlauf, wiedergegeben durch den Abschnitt zd', auf den zunächst noch näherungsweise konstanten, beispielsweise durch Bergabrollen sich leicht erhöhenden Wert der Drehzahl der Getriebeeingangswelle 24. Durch entsprechende Ansteuerung der Kupplungsanordnung 20 bzw. der Stellgliedanordnung 40 derselben wird die Kupplung weiter in Richtung Einkuppelstellung verstellt, wodurch dafür gesorgt wird, dass in Anpassung an diesen Solldrehzahverlauf zd' auch die Drehzahl des Antriebsaggregats 12 einen näherungsweise gleichen Verlauf nimmt. Das Abgabedrehmoment des Antriebsaggregats 12 wird in dieser Phase dann gemäß dem Vorgabemoment v und einer entsprechenden Sollmomentenkurve zm eingestellt, wobei hier in dem Diagramm c) der Figur erkennbar ist, dass auf Grund eines näherungsweise konstant gehaltenen Fahrpedals 62 hier auch ein sich nur gering änderndes Vorgabemoment bzw. dann auch Abgabemoment des Antriebsaggregats 12 vorhanden ist.

Die Drehzahl des Antriebsaggregats 12, wiedergegeben durch die Kurve m im Diagramm d, nähert sich nun zusammen mit der Solldrehzahlvorgabe zd' der Kurve g, also der Drehzahl der Getriebeeingangswelle 24 an. Zum Zeitpunkt t₄ erreicht die Drehzahl des Antriebsaggregats 12 dann die Drehzahl der Getriebeeingangswelle 24, wobei unter Erreichen hier verstanden werden kann, dass beispielsweise eine vorbestimmte maximal zulässige Drehzahldifferenz unterschritten wird und ggf. auch eine vorbestimmte maximal zulässige Drehzahlgradientendifferenz unterschritten wird. Es ist dann dafür gesorgt, dass folgend auf diesen den Synchronzustand im Wesentlichen repräsentierenden Zeitpunkt t₄ die beiden in Frage stehenden Drehzahlen, also die Getriebeeingangsdrehzahl einerseits und die Drehzahl des Antriebsaggregats 12 andererseits, näherungsweise einen gleichen Verlauf nehmen werden. Es wird dann ab dem Zeitpunkt t₄ durch entsprechende Ansteuerung der Stellgliedanordnung 40 die Kupplungsanordnung 20 beispielsweise mit konstanter Stellgeschwindigkeit in Richtung Einkuppelstellung EK verstellt, welche zum Zeitpunkt t₅ erreicht wird. Auf Grund der vorhandenen Drehzahlübereinstimmung wird in dieser vierten Phase, also der zwischen dem Zeitunkt t₄ und t₅ liegenden Phase, beim Einrücken der Kupplungsanordnung 20 kein Einkuppelstoß mehr erzeugt.

Durch die erfindungsgemäße Vorgehensweise wird dafür gesorgt, dass das Fahrzeug aus dem rollenden Zustand wieder in einen Antriebszustand gelangt, und zwar ohne dass Einkuppelstöße und daraus resultierende Longitudinalschwingungen erzeugt werden. Wesentlich hierfür ist, dass der Vorgang, in welchem der Drehmomentübertragungszustand wieder hergestellt wird, in verschiedene Phasen aufgeteilt ist, in welchen in einer ersten Phase nach oder bei Herstellung eines Einrückbereitschaftszustands der Kupplungsanordnung 20 zunächst durch Drehzahlregelung die Drehzahl des Antriebsaggregats auf eine Solldrehzahl über der Drehzahl der Getriebeeingangswelle gebracht wird und in einer zweiten Phase dann bei im Wesentlichen kontinuierlicher Erhöhung des Abgabedrehmoments des Antriebsaggregats auf den durch Fahrpedalbetätigung vorgegebenen Wert oder Wertebereich durch Einrücken der Kupplungsanordnung die Drehzahl zumindest geringfügig gedrückt und wieder in Richtung auf die Getriebeeingangsdrehzahl gebracht wird. In einer dritten Phase wird dann durch Vorgabe einer allmählich an die Getriebeeingangsdrehzahl heranführenden Solldrehzahlkurve in stoßfreier Art und Weise durch allmähliches Einrücken der Kupplung der Synchronzustand hergestellt, worauf folgend in einer vierten Phase die Kupplungsanordnung dann vollständig eingerückt wird und nach weiterer Erhöhung des Vorgabemoments, bedingt durch ein weiteres Niederdrücken des Fahrpedals 62, dann das Fahrzeug beschleunigt werden kann.

Es sei darauf hingewiesen, dass vorangehend mit Bezug auf die Fig. 2 das im Diagramm c) erkennbare Sollmoment zm als diejenige Größe dargestellt worden ist, welche zu den verschiedenen Zeitpunkten das vom Antriebsaggregat bereitzustellende Drehmoment vorgibt. Ob dieses Sollmoment aus dem für die Ansteuerung des Antriebsaggregats zuständigen Bereich der Ansteuervorrichtung 36 oder dem für die Ansteuerung der Kupplungsanordnung bzw. der Getriebeanordnung verantwortlichen Bereich der Ansteuervorrichtung 36 vorgegeben wird, ist für die Prinzipien der vorliegenden Erfindung unbedeutend. Selbstverständlich ist es auch möglich, in der ersten Phase, also der Drehzahlregelphase zwischen den Zeitpunkten t₁ und t₂, aus dem für die Ansteuerung des Antriebsaggregats 12 verantwortlichen Bereich ein Sollmoment bzw. Vorgabemoment vorzugeben, beruhend auf welchem dann die Ansteuerung des Antriebsaggregats erfolgt. Dieses Vorgabemoment weist dann einen Verlauf auf, der näherungsweise dem Verlauf des Sollmoments zm in dieser ersten Phase des Diagramms c) entspricht. Beim Wechsel zur zweiten Phase, also der Drehmomenten- bzw. Kupplungsregelphase zwischen den Zeitpunkten t₂ und t₃, wird dann vom Motormanagementbereich ein Vorgabemoment v bestimmt, das näherungsweise der Fahrpedalbetätigung entspricht und beispielsweise den in dieser Phase des Diagramms c) entsprechenden Verlauf aufweist. Das in dieser Phase zur Ansteuerung des Antriebaggregats genutze Sollmoment zm wird aus dem für die Getriebe- bzw. Kupplungsansteuerung verantwortlichen Bereich generiert und gemäß der in dieser Phase in dem Diagramm c) erkennbaren Rampe an die aus dem Motormanagementbereich gemäß der Fahrpedalbetätigung vorgegebene Größe herangeführt.

## Patentansprüche

1. Verfahren zum Bringen eines Antriebssystems eines rollenden Fahrzeugs, welches Antriebssystem eine automatisierte Kupplungsanordnung (20) im Drehmomentübertragungsweg zwischen einem Antriebsaggregat (12) und einer Getriebeanordnung (26) aufweist, bei in der Getriebeanordnung (26) aktivierter Gangstufe und zumindest teilweise ausgerückter Kupplungsanordnung (20) in einen zur Drehmomentübertragung zwischen dem Antriebsaggregat (12) und der Getriebeanordnung (26) bereiten Zustand, umfassend die Maßnahmen:
a) Verändern der Drehzahl (m) des Antriebsaggregats (12) auf eine über einer Getriebeeingangsdrehzahl (g) liegende Solldrehzahl (zd),
b) dann, wenn die Drehzahl (m) des Antriebsaggregats (12) im Bereich der Solldrehzahl (zd) ist, Erhöhen des Abgabedrehmoments des Antriebsaggregats (12) und Verstellen der Kupplungsanordnung (20) in Richtung Einrücken zum Senken der Drehzahl (m) des Antriebsaggregats (12) in Richtung Solldrehzahl (zd).

2. Verfahren nach Anspruch 1,
**dadurch gekennzeichnet, dass** vor oder während des Ergreifens der Maßnahme a) die Kupplungsanordnung (20) in einen Stellzustand gebracht wird, der um einen Versatz (Δ) von einem Schleifpunktstellzustand (SP) in Richtung Auskuppeln verschoben ist.

3. Verfahren nach Anspruch 1 oder 2,
**dadurch gekennzeichnet, dass** bei Durchführung der Maßnahme b) das Abgabedrehmoment des Antriebsaggregats (12) mit einer vorbestimmten Rate erhöht wird.

4. Verfahren nach Anspruch 3,
**dadurch gekennzeichnet, dass** das Abgabedrehmoment des Antriebsaggregats (12) mit im Wesentlichen konstanter Rate erhöht wird.

5. Verfahren nach einem der Ansprüche 1 bis 4,
**dadurch gekennzeichnet, dass** bei Durchführung der Maßnahme b) das Abgabedrehmoment des Antriebsaggregats (12) auf ein Sollmoment erhöht wird.

6. Verfahren nach Anspruch 5,
**dadurch gekennzeichnet, dass** das Sollmoment im Wesentlichen einem durch Fahrorganbetätigung geforderten Vorgabemoment (v) entspricht.

7. Verfahren nach einem der Ansprüche 1 bis 6,
**dadurch gekennzeichnet, dass** dann, wenn nach Durchführung der Maßnahme b) die Drehzahl des Antriebsaggregats (12) nicht im Bereich der Getriebeeingangsdrehzahl (g) ist, wenigstens durch Verstellen der Kupplungsanordnung (20) in Richtung Einkuppeln die Drehzahl (m) des Antriebsaggregats (12) in Anpassung an einen sich der Getriebeeingangsdrehzahl (g) annähernden Solldrehzahlverlauf (zd') in Richtung Getriebeeingangsdrehzahl (g) verändert wird.

8. Verfahren nach Anspruch 7,
**dadurch gekennzeichnet, dass** der Solldrehzahlverlauf (zd') eine exponentielle Änderung der Drehzahl (m) des Antriebsaggregats (12) vorgibt.

9. Verfahren nach Anspruch 5 und Anspruch 7 oder 8,
**dadurch gekennzeichnet, dass** bei Erreichen des Sollmoments und vorhandener Abweichung zwischen der Drehzahl (m) des Antriebsaggregats (12) und der Getriebeeingangsdrehzahl (g) ein Anfangsdrehzahlwert des Drehzahlverlaufs (zd') auf einen Wert im Bereich der Drehzahl (m) des Antriebsaggregats (12) gesetzt wird.

10. Verfahren nach einem der Ansprüche 7 bis 9,
**dadurch gekennzeichnet, dass** dann, wenn die Drehzahl (m) des Antriebsaggregats (12) im Bereich der Getriebeeingangsdrehzahl (g) ist, die Kupplungsanordnung (20) vollständig eingerückt wird.

## Claims

1. Method for shifting a drive system of a freewheeling vehicle into a state which is ready to transmit torque between a drive assembly (12) and a transmission arrangement (26) when a gear stage is activated in the transmission arrangement (26) and the clutch arrangement (20) is at least partially disengaged, which drive system has an automated clutch arrangement (20) in the torque transmission path between the drive assembly (12) and the transmission arrangement (26), comprising the following measures:
a) the rotational speed (m) of the drive assembly (12) is changed to a setpoint rotational speed (zd) which lies above the transmission input rotational speed (g),
b) then, when the rotational speed (m) of the drive assembly (12) lies in the region of the setpoint rotational speed (zd), the output torque of the drive assembly (12) is increased and the clutch arrangement (20) is adjusted in the direction of engagement in order to reduce the rotational speed (m) of the drive assembly (12) in the direction of the setpoint rotational speed (zd).

2. Method according to Claim 1, **characterized in that**, before or while measure a) is performed, the clutch arrangement (20) is moved into a regulating state which is displaced from a biting-point regulating state (SP) in the direction of disengagement by an offset (Δ).

3. Method according to Claim 1 or 2, **characterized in that**, when performing measure b), the output torque of the drive assembly (12) is increased at a predefined rate.

4. Method according to Claim 3, **characterized in that** the output torque of the drive assembly (12) is increased at a substantially constant rate.

5. Method according to one of Claims 1 to 4, **characterized in that**, when performing measure b), the output torque of the drive assembly (12) is increased to a setpoint torque.

6. Method according to Claim 5, **characterized in that** the setpoint torque corresponds substantially to a preset torque (v) requested by actuation of a driving element.

7. Method according to one of Claims 1 to 6, **characterized in that** if, after measure b) has been performed, the rotational speed of the drive assembly (12) does not lie in the region of the transmission input rotational speed (g), the rotational speed (m) of the drive assembly (12) is changed, at least by displacing the clutch arrangement (20) in the direction of engagement, in order to adapt the said rotational speed (m) in the direction of the transmission input rotational speed (g) to a setpoint rotational speed profile (2d') which approximates to the transmission input rotational speed (g).

8. Method according to Claim 7, **characterized in that** the setpoint rotational speed profile (zd') defines an exponential change in the rotational speed (m) of the drive assembly (12).

9. Method according to Claim 5 and Claim 7 or 8, **characterized in that**, when the setpoint torque is attained and a deviation is present between the rotational speed (m) of the drive assembly (12) and the transmission input rotational speed (g), an initial rotational speed value of the rotational speed profile (zd') is set to a value in the region of the rotational speed (m) of the drive assembly (12).

10. Method according to one of Claims 7 to 9, **characterized in that**, when the rotational speed (m) of the drive assembly (12) lies in the region of the transmission input rotational speed (g), the clutch arrangement (20) is completely engaged.

## Revendications

1. Procédé d'actionnement d'un système d'entraînement d'un véhicule roulant, lequel système d'entraînement est doté d'un agencement d'embrayage automatique (20) dans le trajet de transmission du couple de rotation entre un agrégat d'entraînement (12) et un agencement de vitesses (26) lorsqu'une vitesse est activée dans l'agencement de vitesses (26) et lorsque l'agencement d'embrayage (20) est au moins partiellement débrayé dans un état prêt à transmettre le couple de rotation entre l'agrégat d'entraînement (12) et l'agencement de vitesses (26), comportant les mesures suivantes :
a) modification de la vitesse de rotation (m) de l'agrégat d'entraînement (12) au-delà d'une vitesse de rotation théorique (zd) supérieure à la vitesse de rotation d'entrée de vitesse (g),
b) ensuite, lorsque la vitesse de rotation (m) de l'agrégat d'entraînement (12) se situe dans la plage de la vitesse de rotation théorique (zd), augmentation du couple de rotation restitué par l'agrégat d'entraînement (12) et déplacement de l'agencement d'embrayage (20) dans le sens d'embrayage pour baisser la vitesse de rotation (m) de l'agrégat d'entraînement (12) dans le sens de la vitesse de rotation théorique (zd).

2. Procédé selon la revendication 1, **caractérisé en ce qu'**avant ou pendant l'application de la mesure a), l'agencement d'embrayage (20) est amené dans un état de réglage, qui est décalé d'un déport (Δ) par rapport à un état de réglage du point d'engagement (SP) dans le sens de débrayage.

3. Procédé selon la revendication 1 ou 2, **caractérisé en ce que** lors de la réalisation de la mesure b), le couple de rotation restitué par l'agrégat d'entraînement (12) est augmenté d'un taux prédéfini.

4. Procédé selon la revendication 3, **caractérisé en ce que** le couple de rotation restitué par l'agrégat d'entraînement (12) est augmenté d'un taux sensiblement constant.

5. Procédé selon l'une quelconque des revendications 1 à 4, **caractérisé en ce que** lors de la réalisation de la mesure b),le couple de rotation restitué par l'agrégat d'entraînement (12) est augmenté à un couple théorique.

6. Procédé selon la revendication 5, **caractérisé en ce que** le couple théorique correspond sensiblement à un couple prescrit (v) requis par actionnement d'un organe de conduite.

7. Procédé selon l'une quelconque des revendications 1 à 6, **caractérisé en ce que** si après la réalisation de la mesure b), la vitesse de rotation de l'agrégat d'entraînement (12) ne se situe pas dans la plage de la vitesse de rotation d'entrée de vitesse (g), la vitesse de rotation (m) de l'agrégat d'entraînement (12) est modifiée pour s'adapter à une courbe de vitesses de rotation théoriques (zd') qui se rapproche de la vitesse de rotation d'entrée de vitesse (g), dans le sens de la vitesse de rotation d'entrée de vitesse (g), au moins par réglage de l'agencement d'embrayage (20) dans le sens d'embrayage.

8. Procédé selon la revendication 7, **caractérisé en ce que** la courbe de vitesses de rotation théoriques (zd') prescrit une modification exponentielle de la vitesse de rotation (m) de l'agrégat d'entraînement (12).

9. Procédé selon la revendication 5 et la revendication 7 ou 8, **caractérisé en ce qu'**à l'atteinte du couple théorique et en présence d'un écart entre la vitesse de rotation (m) de l'agrégat d'entraînement (12) et la vitesse de rotation d'entrée de vitesse (g), une valeur de vitesse de rotation initiale de la courbe des vitesses de rotation (zd') est placée à une valeur se situant dans la plage de la vitesse de rotation (m) de l'agrégat d'entraînement (12).

10. Procédé selon l'une quelconque des revendications 7 à 9, **caractérisé en ce que** si la vitesse de rotation (m) de l'agrégat d'entraînement (12) se situe dans la plage de la vitesse de rotation d'entrée de vitesse (g), l'agencement d'embrayage (20) est entièrement embrayé.
